# EUROPEAN PATENT APPLICATION

(11) **EP 4 529 336 A1**
(43) Date of publication of application: **26.03.2025**
(21) Application number: 22941984.1
(22) Date of filing: 17.05.2022
(51) Int. Cl.: H04W 74/08

(54) **RANDOM ACCESS METHOD AND APPARATUS**

(71) Applicant: Beijing Xiaomi Mobile Software Co., Ltd., Beijing 100085 (CN)
(72) Inventor: QIAO, Xuemei, Beijing 100085 (CN)
(74) Representative: Stöckeler, Ferdinand
(86) International application number: PCT/CN2022/093407
(87) International publication number: WO 2023/220942

(57) **Abstract**

Embodiments of the present application disclose a random access method and apparatus. The method comprises: determining the number of transmissions of a first random access message; determining, from candidate random access opportunities, target random access opportunities the number of which is equal to the number of transmissions; and transmitting the first random access message to a network device at the target random access opportunities. Thus, a terminal device can transmit a PRACH by means of a reasonable number of repeated transmissions under different conditions, thereby promoting fairness of access opportunities, and reducing energy consumption of the terminal device; moreover, resources used for initiating random access can be flexibly configured, and the communication efficiency of the system is improved.

## Description

### TECHNICAL FIELD

The disclosure relates to the field of communication technologies, more particularly to a random access method and apparatus.

### BACKGROUND

In a four-step random access procedure of a 5G new radio (NR) system, a terminal may transmit a first random access message Msg1(message 1) to a network device. The network device may transmit a second random access message Msg2(message 2) to the terminal after receiving the Msgl.

In 3GPP R18, for a coverage enhancement of physical random access channel (PRACH), it is proposed that a PRACH may be transmitted multiple times in a time domain, that is, PRACH repetition. For a terminal supporting the PRACH repetition, how to configure resources employed by the terminal to initiate random access is a problem that needs to be considered.

### SUMMARY

A first aspect of embodiments of the disclosure provides a random access method, performed by a terminal. The terminal supports a physical random access channel (PRACH) repetition. The method includes:
determining a number of times for sending a first random access message;
determining one or more target random access channel (RACH) occasions (ROs) with a quantity equal to the number of times from one or more candidate ROs; and
sending the first random access message to a network device at the one or more target ROs.

Alternatively, in response to the number of times being one, the one or more candidate ROs include at least one of:
a first RO, in which the first RO is used for the terminal supporting the PRACH repetition to send the first random access message once;
a second RO, in which the second RO is used for the terminal not supporting the PRACH repetition to send the first random access message; or
at least one RO in repetition ROs, in which the repetition ROs include multiple ROs, and the multiple ROs are used to send a PRACH repeatedly.

Alternatively, the one or more candidate ROs include the at least one RO in the repetition ROs. The method also includes:
starting a random access response (RAR) window after the repetition ROs end; and
monitoring an RAR sent by the network device within the RAR window.

Alternatively, the one or more candidate ROs include the at least one RO in the repetition ROs, and the method also include:
starting a random access response (RAR) window after the one or more target ROs end;
monitoring an RAR sent by the network device within the RAR window; and
stopping monitoring the RAR sent by the network device in response to receiving the RAR for the terminal.

Alternatively, in response to the number of times being more than one, the one or more candidate ROs include at least one of:
a group of ROs corresponding to the number of times;
multiple ROs corresponding to a maximum repetition number; or
a specified RO in multiple ROs corresponding to a maximum repetition number.

Alternatively, the one or more candidate ROs include the specified RO in the multiple ROs corresponding to the maximum repetition number, and the specified RO is determined based on a provision of a protocol or an indication of the network device.

Alternatively, the one or more candidate ROs include the multiple ROs corresponding to the maximum repetition number. The method also includes:
starting a random access response (RAR) window after the multiple ROs corresponding to the maximum repetition number end; and
monitoring an RAR sent by the network device within the RAR window.

Alternatively, the one or more candidate ROs include the specified RO in the multiple ROs corresponding to the maximum repetition number, and the method also includes:
starting a random access response (RAR) window after the one or more target ROs end;
monitoring an RAR sent by the network device within the RAR window; and
stopping monitoring the RAR sent by the network device in response to receiving the RAR for the terminal.

Alternatively, determining the number of times for sending the first random access message includes:
receiving configuration/indication signaling sent by the network device, in which the configuration/indication signaling indicates the number of times.

Alternatively, determining the number of times for sending the first random access message includes:
measuring a reference signal receiving power (RSRP) of a reference signal sent by the network device; and
determining the number of times by comparing the RSRP with at least one preset threshold.

Alternatively, the at least one preset threshold and the number of times corresponding to each preset threshold are determined based on a provision of a protocol or a configuration/indication of the network device.

A second aspect of embodiments of the disclosure provides a random access method, performed by a network device. The random access method includes
receiving a first random access message sent by a terminal at one or more target random access channel (RACH) occasions (ROs),

The one or more target ROs are included in one or more candidate ROs, a quantity of the one or more target ROs is equal to a number of times for sending the first random access message by the terminal, and the terminal supports a physical random access channel (PRACH) repetition.

Alternatively, in response to the number of times being one, the one or more candidate ROs include at least one of:
a first RO, in which the first RO is used for the terminal supporting the PRACH repetition to send the first random access message once;
a second RO, in which the second RO is used for the terminal not supporting the PRACH repetition to send the first random access message; or
at least one RO in repetition ROs, in which the repetition ROs include multiple ROs, and the multiple ROs are used to send a PRACH repeatedly.

Alternatively, the one or more candidate ROs include the at least one RO in the repetition ROs, and the method also includes:
detecting the first random access message sent by the terminal after the repetition ROs end; and
sending a random access response (RAR) to the terminal in response to successful detection.

Alternatively, the one or more candidate ROs include the at least one RO in the repetition ROs, and the method also includes:
detecting the first random access message sent by the terminal after each of the at least one RO ends; and
sending a random access response (RAR) to the terminal in response to successful detection.

Alternatively, in response to the number of times being more than one, the one or more candidate ROs include at least one of:
a group of ROs corresponding to the number of times;
multiple ROs corresponding to a maximum repetition number; or
a specified RO in multiple ROs corresponding to a maximum repetition number.

Alternatively, the method also includes
sending first indication information to the terminal, in which the first indication information is used to determine that the one or more candidate ROs include the specified RO in the multiple ROs corresponding the maximum repetition number.

Alternatively, the one or more candidate ROs include the multiple ROs corresponding to the maximum repetition number, and the method also includes:
detecting the first random access message sent by the terminal after the multiple ROs corresponding to the maximum repetition number end;
sending a random access response (RAR) to the terminal in response to successful detection.

Alternatively, the one or more candidate ROs include the specified RO in the multiple ROs corresponding to the maximum repetition number, and the method also includes:
detecting the first random access message sent by the terminal after the specified RO ends; and
sending a random access response (RAR) to the terminal in response to successful detection.

Alternatively, the method also includes:
sending a configuration/indication signaling to the terminal, in which the configuration/indication signaling indicates the number of times for sending the first random access message.

Alternatively, the method also includes:
sending configuration/indication information to the terminal, in which the configuration/indication information is used to determine at least one preset threshold and a number of times corresponding to each preset threshold,
the at least one preset threshold is used for the terminal to determine the number of times.

A third aspect of embodiments of the disclosure provides a random access apparatus, applied to a terminal. The terminal supports a physical random access channel (PRACH) repetition, and the random access apparatus includes:
a processing unit, configured to determine a number of times for sending a first random access message;
in which the processing unit is further configured to determine one or more target random access channel (RACH) occasions (ROs) with a quantity equal to the number of times from one or more candidate ROs; and
a receiving and sending unit, configured to send the first random access message to a network device at the one or more target ROs.

Alternatively, in response to the number of times being one, the one or more candidate ROs include at least one of:
a first RO, in which the first RO is used for the terminal supporting the PRACH repetition to send the first random access message once;
a second RO, in which the second RO is used for the terminal not supporting the PRACH repetition to send the first random access message; or
at least one RO in repetition ROs, in which the repetition ROs include multiple ROs, and the multiple ROs are used to send a PRACH repeatedly.

Alternatively, the one or more candidate ROs include the at least one RO in the repetition ROs, and the receiving and sending unit is also configured to:
start a random access response (RAR) window after the repetition ROs end; and
monitor an RAR sent by the network device within the RAR window.

Alternatively, the one or more candidate ROs include the at least one RO in the repetition ROs, and the receiving and sending unit is also configured to:
start a random access response (RAR) window after the one or more target ROs end;
monitor an RAR sent by the network device within the RAR window; and
stop monitoring the RAR sent by the network device in response to receiving the RAR for the terminal.

Alternatively, in response to the number of times being more than one, the one or more candidate ROs include at least one of:
a group of ROs corresponding to the number of times;
multiple ROs corresponding to a maximum repetition number; or
a specified RO in multiple ROs corresponding to a maximum repetition number.

Alternatively, the one or more candidate ROs include the specified RO in the multiple ROs corresponding to the maximum repetition number, and the specified RO is determined based on a provision of a protocol or an indication of the network device.

Alternatively, the one or more candidate ROs include the multiple ROs corresponding to the maximum repetition number, and the receiving and sending unit is also configured to:
start a random access response (RAR) window after the multiple ROs corresponding to the maximum repetition number end; and
monitor an RAR sent by the network device within the RAR window.

Alternatively, the one or more candidate ROs include the specified RO in the multiple ROs corresponding to the maximum repetition number, and the receiving and sending unit is also configured to:
start a random access response (RAR) window after the one or more target ROs end;
monitor an RAR sent by the network device within the RAR window; and
stop monitoring the RAR sent by the network device in response to receiving the RAR for the terminal.

Alternatively, the processing unit is configured to:
receive configuration/indication signaling sent by the network device, in which the configuration/indication signaling indicates the number of times.

Alternatively, the processing unit is configured to:
measure a reference signal receiving power (RSRP) of a reference signal sent by the network device; and
determine the number of times by comparing the RSRP with at least one preset threshold.

Alternatively, the at least one preset threshold and the number of times corresponding to each preset threshold are determined based on a provision of a protocol or a configuration/indication of the network device.

A fourth aspect of embodiments of the disclosure provides a random access apparatus, applied to a network device. The random access apparatus includes:
a receiving and sending unit, configured to receive a first random access message sent by a terminal at one or more target random access channel (RACH) occasions (ROs).

The one or more target ROs are included in one or more candidate ROs, a quantity of the one or more target ROs is equal to a number of times for sending the first random access message by the terminal, and the terminal supports a physical random access channel (PRACH) repetition.

Alternatively, in response to the number of times being one, the one or more candidate ROs include at least one of:
a first RO, in which the first RO is used for the terminal supporting the PRACH repetition to send the first random access message once;
a second RO, in which the second RO is used for the terminal not supporting the PRACH repetition to send the first random access message; or
at least one RO in repetition ROs, in which the repetition ROs include multiple ROs, and the multiple ROs are used to send a PRACH repeatedly.

Alternatively, the one or more candidate ROs include the at least one RO in the repetition ROs, and the receiving and sending unit is also configured to:
detect the first random access message sent by the terminal after the repetition ROs end; and
send a random access response (RAR) to the terminal in response to successful detection.

Alternatively, the one or more candidate ROs include the at least one RO in the repetition ROs, and the receiving and sending unit is also configured to:
detect the first random access message sent by the terminal after each of the at least one RO ends; and
send a random access response (RAR) to the terminal in response to successful detection.

Alternatively, in response to the number of times being more than one, the one or more candidate ROs include at least one of:
a group of ROs corresponding to the number of times;
multiple ROs corresponding to a maximum repetition number; or
a specified RO in multiple ROs corresponding to a maximum repetition number.

Alternatively, the receiving and sending unit is also configured to:
send first indication information to the terminal, in which the first indication information is used to determine that the one or more candidate ROs include the specified RO in the multiple ROs corresponding the maximum repetition number.

Alternatively, the one or more candidate ROs include the multiple ROs corresponding to the maximum repetition number, and the receiving and sending unit is also configured to:
detect the first random access message sent by the terminal after the multiple ROs corresponding to the maximum repetition number end; and
send a random access response (RAR) to the terminal in response to successful detection.

Alternatively, the one or more candidate ROs include the specified RO in the ROs corresponding to the maximum repetition number, and the receiving and sending unit is also configured to:
detect the first random access message sent by the terminal after the specified RO ends; and
send a random access response (RAR) to the terminal in response to successful detection.

Alternatively, the receiving and sending unit is also configured to:
send a configuration/indication signaling to the terminal, in which the configuration/indication signaling indicates the number of times for sending the first random access message.

Alternatively, the receiving and sending unit is also configured to:
send configuration/indication information to the terminal, in which the configuration/indication information is used to determine at least one preset threshold and a number of times corresponding to each preset threshold.

The at least one preset threshold is used for the terminal to determine the number of times.

A fifth aspect of embodiments of the disclosure provides a communication device, including a processor and a memory for storing a computer program. When the computer program is executed by the processor, to cause the communication device to perform the random access method in the first aspect of embodiments.

A sixth aspect of embodiments of the disclosure provides a communication device, including a processor and a memory for storing a computer program. When the computer program is executed by the processor, to cause the communication device to perform the random access method in the second aspect of embodiments.

A seventh aspect of embodiments of the disclosure provides a communication device, including: a processor and an interface circuit. The interface circuit is configured to receive code instructions and to transmit the code instructions to the processor. The processor is configured to run the code instructions to cause the communication device to perform the random access method in the first aspect of embodiments.

An eighth aspect of embodiments of the disclosure provides a communication device, including: a processor and an interface circuit. The interface circuit is configured to receive code instructions and to transmit the code instructions to the processor. The processor is configured to run the code instructions to cause the communication device to perform the random access method in the second aspect of embodiments.

A ninth aspect of embodiments of the disclosure provides a computer-readable storage medium, configured to store instructions. When the instructions are executed, the random access method in the first aspect of embodiments is realized.

A tenth aspect of embodiments of the disclosure provides a computer-readable storage medium, configured to store instructions. When the instructions are executed, the random access method in the first aspect of embodiments is realized.

An eleventh aspect of embodiments of the disclosure provides a computer program. When the computer program is run on a computer, the computer is caused to perform the random access method described in the first aspect of embodiments.

A twelfth aspect of embodiments of the disclosure provides a computer program. When the computer program is run on a computer, the computer is caused to perform the random access method described in the second aspect of embodiments.

With the random access method and apparatus according to embodiments of the disclosure, the number of times for sending the first random access message is determined, the one or more target ROs with the quantity equal to the number of times are determined from the one or more candidate ROs, and the first random access message is sent to the network device at the one or more target ROs, such that the terminal may send the PRACH employing reasonable repetition numbers in different conditions, a fairness of an access opportunity is increased, an energy consumption of the terminal is saved, and at the same time, resources used for initiating random access may be flexibly configured, and an communication efficiency of a system is improved.

Additional aspect and advantages of that disclosure will be set forth in part in the following description, and a part will be obvious from the following description, or may be learned by practice of the disclosure.

### BRIEF DESCRIPTION OF THE DRAWINGS

In order to more clearly illustrate embodiments of the disclosure or technical solutions in the related art, description is made below to accompanying drawings needed to use in embodiments of the disclosure or the related art.
FIG. 1 is a schematic diagram illustrating a communication system according to an embodiment of the disclosure.
FIG. 2 is a flow chart illustrating a random access method according to an embodiment of the disclosure.
FIG. 3 is a flow chart illustrating a random access method according to an embodiment of the disclosure.
FIG. 4 is a schematic diagram illustrating a way for configuring a random access channel occasion (RO) according to an embodiment of the disclosure.
FIG. 5 is a flow chart illustrating a random access method according to an embodiment of the disclosure.
FIG. 6 is a flow chart illustrating a random access method according to an embodiment of the disclosure.
FIG. 7 is a flow chart illustrating a random access method according to an embodiment of the disclosure.
FIG. 8a is a schematic diagram illustrating a way for configuring a random access channel occasion (RO) according to an embodiment of the disclosure.
FIG. 8b is a schematic diagram illustrating a way for configuring a random access channel occasion (RO) according to an embodiment of the disclosure.
FIG. 8c is a schematic diagram illustrating a way for configuring a random access channel occasion (RO)according to an embodiment of the disclosure.
FIG. 8d is a schematic diagram illustrating a way for configuring a random access channel occasion (RO) according to an embodiment of the disclosure.
FIG. 9 is a flow chart illustrating a random access method according to an embodiment of the disclosure.
FIG. 10 is a flow chart illustrating a random access method according to an embodiment of the disclosure.
FIG. 11 is a flow chart illustrating a random access method according to an embodiment of the disclosure.
FIG. 12 is a flow chart illustrating a random access method according to an embodiment of the disclosure.
FIG. 13 is a block diagram illustrating a random access apparatus according to an embodiment of the disclosure.
FIG. 14 is a block diagram illustrating a random access apparatus according to an embodiment of the disclosure.
FIG. 15 is a block diagram illustrating a random access device according to another embodiment of the disclosure.
FIG. 16 is a block diagram illustrating a chip according to an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations described in the following exemplary embodiments do not represent all implementations consistent with embodiments of the disclosure. Instead, they are merely examples of the apparatuses and methods consistent with some aspects of the embodiments of the disclosure as detailed in the appended claims.

Terms described in the embodiments of the disclosure are only for the purpose of describing specific embodiments, but should not be construed to limit the embodiments of the disclosure. As used in the embodiments of the disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although the terms such as "first", "second", "third", etc. may be used in embodiments of disclosure to describe various information, such information should not be limited by these terms. These terms are only used to distinguish the same type of information from each other. For example, first information may also be referred to as second information, and similarly, the second information may also be referred to as the first information, without departing from the scope of embodiments of the disclosure. As used herein, the term "if" may be construed to mean "when" or "upon" or "in response to determining" depending on the context.

Description is made in detail below to embodiments of the disclosure, examples of which are illustrated in the accompanying drawings, in which the same or similar reference numerals indicate the same or similar elements throughout. Embodiments described below with reference to the accompanying drawings are exemplary and are intended to explain the disclosure, but not to be construed as limitations of the disclosure.

In order to better understand a random access method disclosed in embodiments of the disclosure, description is made below to a communication system to which embodiments of the disclosure applies.

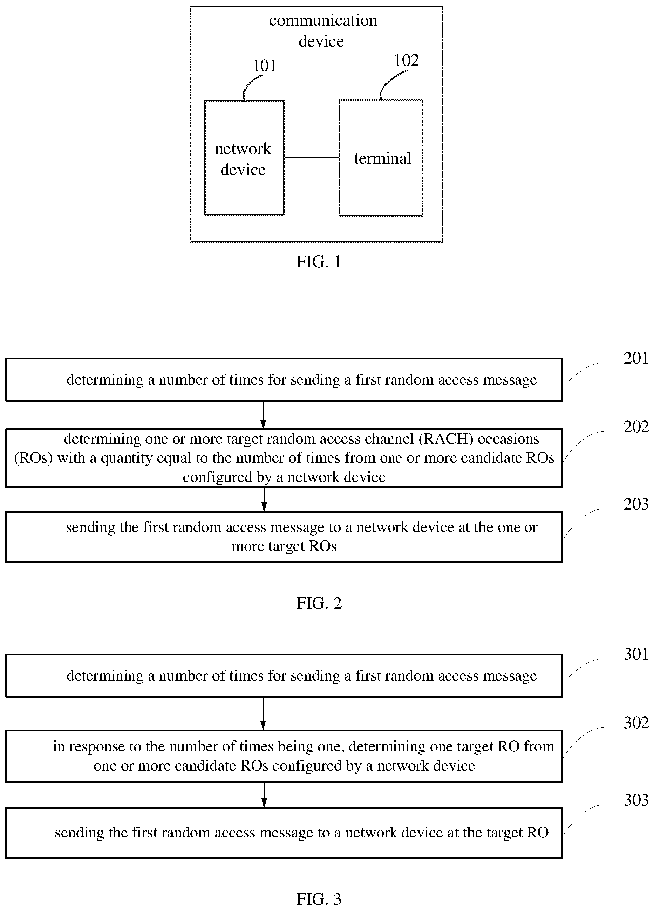

Referring to FIG. 1, FIG. 1 is a schematic diagram illustrating a communication system according to an embodiment of the disclosure. The communication system may include, but is not limited to, a first network device, a second network device and a terminal. The number and form of devices illustrated in FIG. 1 are only for example and do not constitute a limitation to embodiments of the disclosure, and two or more network devices and two or more terminals may be included in a practical application. The communication system illustrated in FIG. 1 takes an example of including a network device 101 and a terminal 102 as an example.

It should be noted that the technical solution of embodiments of the disclosure may be applied to various communication systems, such as, a long term evolution (LTE) system, a 5th generation (5G) mobile communication system, a 5G new radio (NR) system, or another future new mobile communication system.

The network device 101 in embodiments of the disclosure is an entity for transmitting or receiving a signal in a network side. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. A detailed technology and a detailed device form employed by the network device are not limited in embodiments of the disclosure. The network device provided in embodiments of the disclosure may be combined by a central unit (CU) and a distributed unit (DU). The CU may also be referred to as a control unit. A protocol layer of the network device, such as the base station, may be separated by employing a CU-DU structure, in which, part of functions of the protocol layer are centrally controlled by the CU, while part or all of remaining functions of the protocol layer are distributed in the DU. The DU is controlled by the CU.

The terminal 102 in embodiments of the disclosure is an entity for receiving or transmitting a signal in a user side, such as, a mobile phone. The terminal may also be referred to as a terminal, a user equipment (UE), a mobile station (MS), a mobile terminal (MT), or the like. The terminal may be an automobile with a communication function, a smart automobile, a mobile phone, a wearable device, a pad, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, and the like. A detailed technology and a detailed device form employed by the terminal are not limited in embodiments of the disclosure.

In a four-step random access procedure of the 5G NR system, the terminal 102 may transmit a first random access message Msg1(message 1) to the network device 101, and the network device 101 transmits a second random access message Msg2(message 2) to the terminal after receiving the Msgl.

In 3GPP R18, for a coverage enhancement of physical random access channel (PRACH), it is proposed that a PRACH may be transmitted multiple times in a time domain, that is, PRACH repetition. For the terminal 102 supporting the PRACH repetition, how to configure resources employed by the terminal 102 to initiate random access is a problem that needs to be considered. One possible direction is that the terminal 102 employs the same uplink transmission beam (UL TX beam) to repeatedly transmit the PRACH at multiple transmission occasions (that is, random access channel occasion, RO). The multiple transmission occasions correspond to multiple transmission time slots, which may be continuous or discrete, and are not limited here.

In addition, in the case that the terminal 102 triggers the PRACH repetition based on a measured reference signal receiving power (RSRP), it is considered that even if the terminal is located at an edge of a cell, positions of different terminals from the network device 101 may be different. In this case, when terminals with different coverage constraints employ the same RSRP threshold and the same PRACH resources to repeatedly transmit the PRACH, a high power interference may be caused, and a fairness of a terminal which is relatively far away from the network device to access the cell may be affected simultaneously. In addition, when a terminal which is relatively close to the network device transmits the PRACH more times, unnecessary energy waste may be also brought to the terminal. Therefore, there needs to consider a design of different determining thresholds and different PRACH repetition numbers.

It may be understood that, the communication system described in embodiments of the disclosure is for describing the technical solution of embodiments of the disclosure more clearly, and does not constitute a limitation on the technical solution of embodiments of the disclosure. The ordinary skilled in the art knows, with an evolution of a system architecture and an emergence of a new business scenario, the technical solution of embodiments of the disclosure is also applicable to a similar technical problem.

Description is made in detail below to a random access method and apparatus according to the disclosure with reference to accompanying drawings.

Referring to FIG. 2, FIG. 2 is a flow chart illustrating a random access method according to an embodiment of the disclosure. It should be noted that the random access method in embodiments of the disclosure is performed by a terminal, and the terminal supports a physical random access channel (PRACH) repetition. The random access method may be performed independently or in combination with any other embodiment of the disclosure. As illustrated in FIG. 2, the random access method may include the following.

At block 201, a number N of times for sending a first random access message is determined.

In embodiments of the disclosure, the number N of times for sending the first random access message Msgl may be determined by the terminal.

In some implementations, the terminal may determine the number N of times for sending the first random access message Msgl by receiving a configuration or indication signaling sent by a network device.

Alternatively, the configuration or indication signaling may be downlink control information (DCI), a system information block such as an SIB1, a radio resource control (RRC) signaling, or the like.

In some implementations, the terminal may measure an RSRP of a reference signal received, and determine the number of times for sending the first random access message Msgl by comparing a measured RSRP with at least one preset threshold.

Alternatively, the at least one preset threshold and the number of times corresponding to each preset threshold may be determined based on a provision of a protocol, or based on a configuration or indication of the network device.

At block 202, N target random access channel (RACH) occasion(s) (RO) is determined from one or more candidate ROs.

In all embodiments of the disclosure, after the number of times for sending the first random access message Msgl by the terminal repeatedly is determined by the terminal, the terminal may determine one or more target ROs with a quantity equal to the number of times for sending the Msgl repeatedly from one or more candidate ROs configured by the network device or from one or more candidate ROs candidate RO determined by a communication protocol. Of course, the terminal may also determine the N target RO(s) for sending the Msgl repeatedly from the one or more candidate ROs configured by the network device or the one or more candidate ROs determined by the communication protocol based on configuration information of the network device. In the following embodiments, the above contents may not be repeated.

In some implementations, the number of times for sending the Msgl by the terminal repeatedly is one (that is, N=1), the one or more candidate ROs may include at least one of:
a first RO, in which the first RO is used for the terminal supporting the PRACH repetition to send the first random access message once;
a second RO, in which the second RO is used for the terminal not supporting the PRACH repetition to send the first random access message; or
at least one RO in repetition ROs, in which the repetition ROs includes multiple ROs, and the multiple ROs are used to send a PRACH repeatedly.

In some implementations, the number of times for sending the Msgl repeatedly by the terminal is more than one (that is, N>1), the one or more candidate ROs may include at least one of:
a group of ROs corresponding to the number of times;
multiple ROs corresponding to a maximum repetition number; or
a specified RO in multiple ROs corresponding to a maximum repetition number.

The terminal may read the configuration signaling of the network device to determine the one or more candidate ROs. The terminal may determine the one or more target ROs with the quantity equal to the number of times from the one or more candidate ROs based on the number of times.

At block 203, the first random access message is sent to the network device at the one or more target ROs.

In embodiments of the disclosure, the terminal may repeatedly send the Msgl to the network device at the one or more target ROs with the quantity equal to the number of times. The network device may send a second random access message Msg2 to the terminal after receiving the Msgl.

It should be noted that, in embodiments of the disclosure, the first random access message Msgl is a random access preamble, and the second random access message Msg2 is a random access response (RAR).

In embodiments of the disclosure, the terminal may start a random access response (RAR) window after sending the Msgl, and may try to monitor and detect the RAR sent by the network device within the RAR window.

In conclusion, the number of times for sending the first random access message is determined , the one or more target ROs with the quantity equal to the number of times is determined from the one or more candidate ROs, and the first random access message is sent to the network device at the one or more target ROs, such that the terminal may send the PRACH employing reasonable repetition numbers in different conditions, which increases a fairness of an access opportunity, saves an energy consumption of the terminal, and at the same time, may configure resources used to initiate random access flexibly and improve a communication efficiency of a communication system.

Referring to FIG. 3, FIG. 3 is a flow chart illustrating a random access method according to an embodiment of the disclosure. It should be noted that the random access method in embodiments of the disclosure is performed by a terminal, and the terminal supports a physical random access channel (PRACH) repetition. The random access method may be performed independently or in combination with any other embodiment of the disclosure. As illustrated in FIG. 3, the random access method may include the following.

At block 301, a number N of times for sending a first random access message is determined.

In embodiments of the disclosure, the number N of times for sending the first random access message Msgl may be determined by the terminal.

In some implementations, the terminal may determine the number N of times for sending the first random access message Msgl by receiving a configuration or indication signaling sent by a network device.

Alternatively, the configuration or indication signaling may be DCI, a system information block such as an SIB1, an RRC signaling, or the like.

In some implementations, the terminal may measure an RSRP of a reference signal received, and determine the number of times for sending the first random access message Msgl by comparing a measured RSRP with at least one preset threshold.

Alternatively, the at least one preset threshold and the number of times corresponding to each preset threshold may be determined based on a provision of a protocol, or based on a configuration or indication of the network device.

At block 302, in response to the number of times being one (that is, N=1), one target RO is determined from one or more candidate ROs.

The target RO is configured to send the first random access message Msgl.

In all embodiments of the disclosure, after the number of times for sending the first random access message Msgl repeatedly by the terminal is determined by the terminal, the terminal may determine one or more target ROs with a quantity equal to the number of times for sending the Msgl repeatedly from one or more candidate ROs configured by the network device or from one or more candidate ROs candidate RO determined by a communication protocol. Of course, the terminal may also determine the N target RO(s) for sending the Msgl repeatedly from the one or more candidate ROs configured by the network device or the one or more candidate ROs determined by the communication protocol based on configuration information of the network device. In the following embodiments, the above contents may not be repeated.

In embodiments of the disclosure, the terminal determines not performing the PRACH repetition based on the configuration or indication of the network device or based on a coverage condition measured by the terminal, and only needs to send the Msgl once. It should be noted that the terminal may support the PRACH repetition.

In some embodiments, the one or more candidate ROs configured by the network device may be at least one of:
a first RO, in which the first RO is used for the terminal supporting the PRACH repetition to send the first random access message once;
a second RO, in which the second RO is used for the terminal not supporting the PRACH repetition to send the first random access message; or
at least one RO in repetition ROs, in which the repetition ROs includes multiple ROs, and the multiple ROs are used to send a PRACH repeatedly.

It should be noted that, the first RO is a separate RO configured by the network device, and is configured for the terminal supporting the PRACH repetition to send the first random access message once. That is, the first RO is different from the second RO for the terminal not supporting the PRACH repetition to send the first random access message.

The second RO is configured for the terminal not supporting the PRACH repetition to send the first random access message, that is, the second RO is resources configured for the terminal in R15 and R16 to send the PRACH.

The repetition ROs, including the multiple ROs, is resources configured by the network device to the terminal for the PRACH repetition.

In embodiments of the disclosure, the terminal supporting the PRACH repetition may determine the first RO and the repetition ROs by receiving and reading the configuration signaling sent by the network device.

In embodiments of the disclosure, when the terminal supporting the PRACH repetition determines the second RO as the candidate RO for sending the Msgl once, the terminal may determine the second RO by receiving and reading the configuration signaling sent by the network device. In embodiments of the disclosure, the terminal may determine the candidate RO based on the provision of the protocol, or the indication of the network device.

In embodiments of the disclosure, the terminal may determine one target RO for sending the Msgl in the first RO, or may also determine one target RO for sending the Msgl in the second RO.

In embodiments of the disclosure, the terminal may also determine sending target RO for sending the Msg1 in the at least one RO in the repetition ROs.

Alternatively, the terminal may determine one RO for the terminal to send the Msgl once from the repetition ROs based on the provision of the protocol or the indication of the network device, that is, determine one RO in the repetition ROs as the candidate RO.

Alternatively, the terminal may also determine the multiple ROs in the repetition ROs based on the provision of the protocol or the indication of the network device, the multiple ROs are configured for the terminal to send the Msgl once, that is, determine the multiple ROs in the repetition ROs as the candidate ROs. It may be understood that, in this case, the terminal may select one RO from the multiple ROs and determine the RO as the target RO for sending the Msgl once.

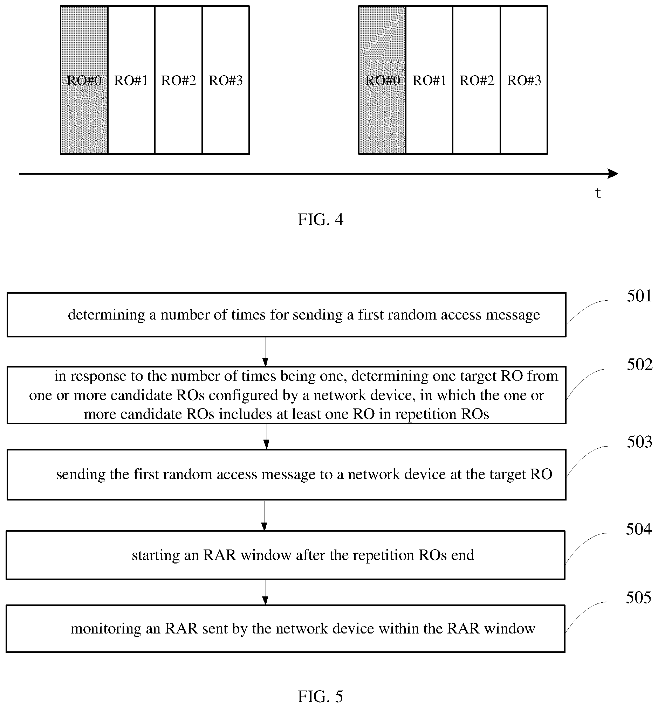

As an example, as illustrated in FIG. 4, FIG. 4 is a schematic diagram illustrating a way for configuring an RO according to an embodiment of the disclosure. The terminal may send the PRACH at the first RO in the repetition ROs sent four times.

Alternatively, the first RO in the repetition ROs sent four times may be determined as the candidate RO based on the provision of the protocol or the indication of the network device, or the multiple ROs in the repetition ROs may be determined as the candidate ROs based on the provision of the protocol or the indication of the network device, and then the terminal randomly selects the first RO as the target RO.

At block 303, the first random access message is sent to the network device at the target RO.

In embodiments of the disclosure, the terminal may repeatedly send the Msgl to the network device at the target RO with the quantity equal to the number of times. The network device may send a second random access message Msg2 to the terminal after receiving the Msgl.

It should be noted that, in embodiments of the disclosure, the first random access message Msgl is a random access preamble, and the second random access message Msg2 is an RAR

In conclusion, the number of times for sending the first random access message is determined , the target RO is determined from the one or more candidate ROs configured by the network device in response to the number of times being one, and the first random access message is sent to the network device at the target RO, such that the terminal may send the PRACH employing reasonable repetition numbers in different conditions, which increases a fairness of an access opportunity and saves an energy consumption of the terminal, and at the same time, may configure resources used to initiate random access flexibly and improve an communication efficiency of a system.

Referring to FIG. 5, FIG. 5 is a flow chart illustrating a random access method according to an embodiment of the disclosure. It should be noted that the random access method in embodiments of the disclosure is performed by a terminal, and the terminal supports a physical random access channel (PRACH) repetition. The random access method may be performed independently or in combination with any other embodiment of the disclosure. As illustrated in FIG. 5, the random access method may include the following.

At block 501, a number N of times for sending a first random access message is determined.

At block 502, in response to the number of times being one (that is, N=1), one target RO is determined from one or more candidate ROs, in which the one or more candidate ROs includes at least one RO in repetition ROs.

At block 503, the first random access message is sent to the network device at the target RO.

In embodiments of the disclosure, the actions at blocks 501 to 503 may be realized by any one of embodiments of the disclosure, which are not limited in embodiments of the disclosure and are not elaborated here.

At block 504, an RAR window is started after the repetition ROs end.

In embodiments of the disclosure, the network device may try to perform the merging correlation detection on a preamble received after a last RO in the repetition ROs ends. After the terminal sends the Msgl at the target RO, the terminal may wait until the repetition ROs ends to start the RAR window, and try to detect and to monitor the second random access message Msg2 sent by the network device.

At block 505, an RAR sent by the network device is monitored within the RAR window.

In embodiments of the disclosure, the terminal may monitor the RAR sent by the network device within the RAR window started, and try to detect the Msg2 sent by the network device.

In conclusion, the number of times for sending the first random access message is determined. One target RO is determined from the one or more candidate ROs configured by the network device in response to the number of times being one, in which the one or more candidate ROs include the at least one RO in the repetition ROs. The first random access message is sent to the network device at the target RO. The RAR window is started after the repetition ROs end, and the RAR sent by the network device is monitored within the RAR window. In this way, the terminal may send the PRACH employing reasonable repetition numbers in different conditions, which increases a fairness of an access opportunity and saves an energy consumption of the terminal, and at the same time, may configure the resource used to initiate random access flexibly, improve a communication efficiency of a system, and reduce a complexity of related detection by the network device.

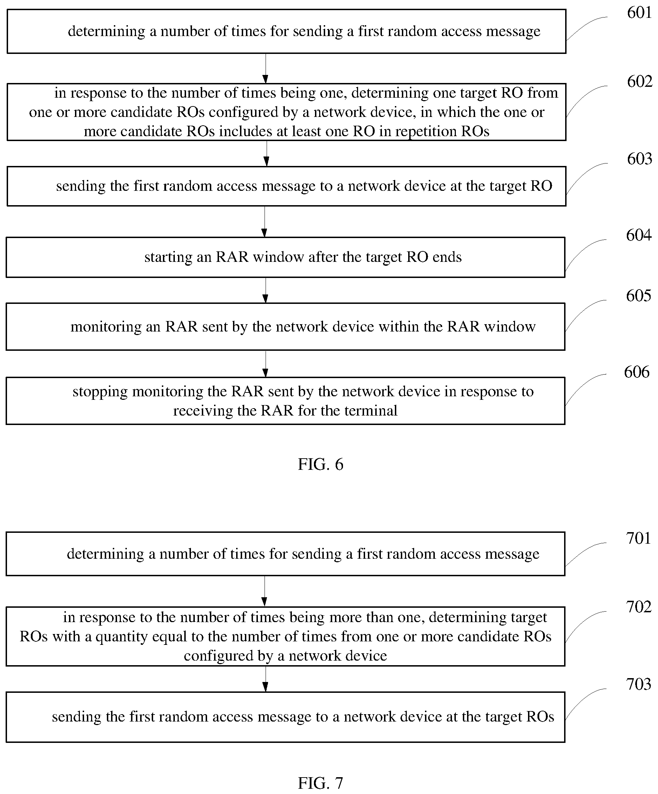

Referring to FIG. 6, FIG. 6 is a flow chart illustrating a random access method according to an embodiment of the disclosure. It should be noted that the random access method in embodiments of the disclosure is performed by a terminal, and the terminal supports a physical random access channel (PRACH) repetition. The random access method may be performed independently or in combination with any other embodiment of the disclosure. As illustrated in FIG. 56, the random access method may include the following.

At block 601, a number N of times for sending of a first random access message is determined.

At block 602, in response to the number of times being one (that is, N=1), one target RO is determined from one or more candidate ROs, in which the one or more candidate ROs include at least one RO in repetition ROs.

At block 603, the first random access message is sent to the network device at the target RO.

In embodiments of the disclosure, the actions at blocks 601 to 603 may be realized by any one of embodiments of the disclosure, which are not limited in embodiments of the disclosure and are not elaborated here.

At block 604, an RAR window is started after the target RO ends.

In embodiments of the disclosure, the network device may try to perform correlation detection on a preamble received at each possible RO position of the repetition ROs. After the terminal sends the Msgl at the target RO, the terminal may immediately start the RAR window, to try to detect and monitor a second random access message Msg2 sent by the network device.

That is, as illustrated in FIG. 4, the network device may perform merging correlation detection on a PRACH after the first RO in the repetition ROs ends. In case that the detection successes, an RAR may be sent to the terminal. The terminal may start the RAR window after the first RO ends, to try to monitor and detect the RAR sent by the network device.

At block 605, the RAR sent by the network device is monitored within the RAR window.

In embodiments of the disclosure, the terminal may monitor the RAR sent by the network device within the RAR window started, and try to detect the Msg2 sent by the network device.

At block 606, monitoring the RAR sent by the network device is stopped in response to receiving the RAR for the terminal.

In embodiments of the disclosure, the terminal may stop monitoring the RAR sent by the network device after receiving the RAR for the terminal.

It may be understood that, in embodiments of the disclosure, when the network device performs the merging correlation detection on the PRACH after the repetition ROs end, the network device may still detect a preamble sent by the terminal at the first RO, causing that the network device may send the RAR multiple times for the same PRACH sent by the same terminal.

Therefore, the terminal may stop monitoring the RAR sent by the network device after receiving the RAR for the terminal as described in embodiments of the disclosure.

In some implementations, the terminal may also receive multiple RARs and select one RAR from the multiple RARs.

In conclusion, the number of times for sending the first random access message is determined. One target RO is determined from the one or more candidate ROs in response to the number of times being one, in which the one or more candidate ROs include the at least one RO in the repetition ROs. The first random access message is sent to the network device at the target RO. The RAR window is started after the target RO ends. The RAR sent by the network device is monitored within the RAR window, and monitoring the RAR sent by the network device is stopped in response to receiving the RAR for the terminal. The terminal may send the PRACH employing reasonable repetition numbers in different conditions, thus increasing a fairness of an access opportunity and saving an energy consumption of the terminal, and at the same time, flexibly configuring resources used to initiate random access, improving a communication efficiency of a system, and shortening an access delay of the terminal.

Referring to FIG. 7, FIG. 7 is a flow chart illustrating a random access method according to an embodiment of the disclosure. It should be noted that the random access method in embodiments of the disclosure is performed by a terminal, and the terminal supports a physical random access channel (PRACH) repetition. The random access method may be performed independently or in combination with any other embodiment of the disclosure. As illustrated in FIG. 7, the random access method may include the following.

At block 701, a number N of times for sending a first random access message is determined.

In embodiments of the disclosure, the number N of times for sending the first random access message Msgl may be determined by the terminal.

In some implementations, the terminal may determine the number of times for sending the first random access message Msgl by receiving a configuration or indication signaling sent by the network device.

Alternatively, the configuration or indication signaling may be DCI, a system information block such as an SIB1, or the like.

In some implementations, the terminal may measure an RSRP of a reference signal received, and determine the number of times for sending the first random access message Msgl by comparing a measured RSRP with at least one preset threshold.

Alternatively, the at least one preset threshold and the number of times corresponding to each preset threshold may be determined based on a provision of a protocol, or based on a configuration or indication of the network device.

At block 702, in response to the number of times being more than one (that is, N>1), target ROs with a quantity equal to the number of times are determined from candidate ROs.

The target ROs are configured to send the first random access message Msgl.

In embodiments of the disclosure, the terminal determines a PRACH repetition number based on the configuration or indication of the network device or based on a coverage condition measured by the terminal.

In embodiments of the disclosure, the candidate RO may include at least one of:
a group of ROs corresponding to the number of times;
multiple ROs corresponding to a maximum repetition number; or
a specified RO in multiple ROs corresponding to a maximum repetition number.

The group of ROs corresponding to the number of times refers to that the network device configures a group of ROs for each repetition number, and the group of ROs corresponding to the number of times is determined from multiple groups of ROs configured. The terminal may perform a PRACH repetition at the group of ROs corresponding to the number of times based on the repetition number. After the terminal sends the PRACH repeatedly, that is, after the target ROs end, the terminal may start an RAR window, to try to monitor an RAR sent by the network device.

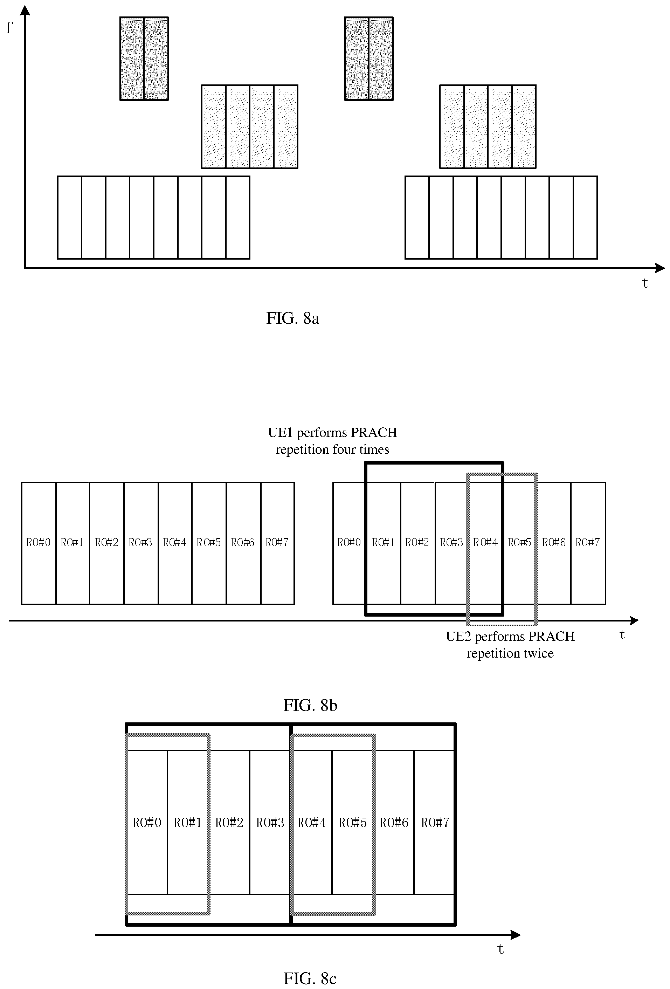

As an example, as illustrated in FIG. 8a, FIG. 8a is a schematic diagram illustrating a way for configuring an RO according to an embodiment of the disclosure. In FIG. 8a, the repetition numbers 2, 4 and 8 respectively correspond to different groups of ROs.

In embodiments of the disclosure, the terminal may also determine that the one or more candidate ROs are the multiple ROs corresponding to the maximum repetition number. The terminal may arbitrarily select the ROs with the quantity equal to the number of times from the multiple ROs based on the number of times determined, and take the ROs as the target ROs for the PRACH repetition.

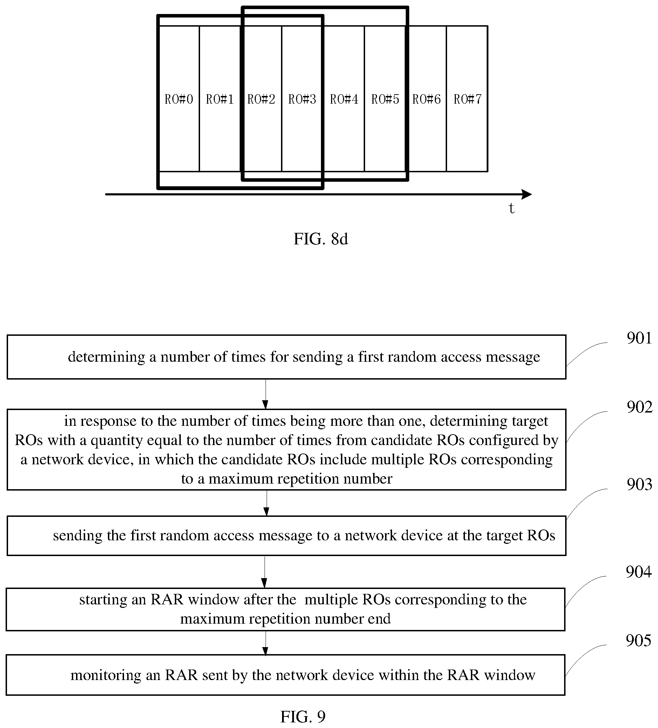

As an example, as illustrated in FIG. 8b, FIG. 8b is a schematic diagram illustrating a way for configuring an RO according to an embodiment of the disclosure. In FIG. 8, the maximum repetition number is 8. A number of times for the PRACH repetition of a first terminal UE1 is 4, and the UE1 determines the second to fifth ROs (RO # 1-RO # 4) in eight ROs corresponding to the maximum repetition number as the target ROs, and performs the PRACH repetition four times. A number of times for the PRACH repetition of a second terminal UE2 is 2, and the UE2 determines the fifth to sixth ROs (RO # 4-RO # 5) in the eight ROs corresponding to the maximum repetition number as the target ROS, and performs the PRACH repetition twice.

In embodiments of the disclosure, the terminal may also determine that the candidate RO includes the specified RO in the multiple ROs corresponding to the maximum repetition number. The terminal may perform the PRACH repetition at the specified RO based on the number of times determined.

Alternatively, the specified RO in the multiple ROs corresponding to the maximum repetition number may be determined by the terminal based on the provision of the protocol or the indication of the network device.

In some implementations, different numbers of times correspond to different specified ROs.

Alternatively, the multiple ROs may include the specified ROs corresponding to the multiple numbers of times.

In some implementations, the multiple ROs may also include multiple specified ROs corresponding to the same number of times, that is, for each of different repetition numbers, there may be multiple pairs of a start position and an end position at the multiple ROs.

As an example, as illustrated in FIGs. 8c and 8d, FIG. 8c is a schematic diagram illustrating a way for configuring an RO according to an embodiment of the disclosure, and FIG. 8d is a schematic diagram illustrating a way for configuring an RO according to an embodiment of the disclosure. In FIG. 8c, the maximum repetition number is 8, and specified ROs corresponding to the number of times being 2 are the first to the second ROs (RO#0-RO#1) and the fifth to the sixth ROs (RO#4-RO#5) in the eight ROs. Specified ROs corresponding to the number of times being 4 are the first to fourth ROs (RO# 0-RO#3) and the fifth to eighth ROs (RO#4-RO# 7) in the eight ROs. In FIG. 8d, the maximum repetition number is 8, and specified ROs corresponding to the number of times being 4 are the first to fourth ROs (RO # 0-RO # 3) and the third to sixth ROs (RO # 2-RO # 5) in the eight ROs.

Alternatively, the specified RO may be determined by the protocol provisioning the start position and the end position, or by indication information sent by the network device. For example, the indication information may indicate a pair of the start position and the end position (in this case, the number of times corresponding to the specified RO may be implicitly determined by the indication information), or the indication information only indicates the start position, and the end position is determined by the number of times.

It should be noted that, in embodiments of the disclosure, the network device may flexibly configure candidate resources corresponding to each number of times based on a resource configuration condition. As an example, for example, the network device may configure random access resources corresponding to a repetition number being 2 as the group of ROs corresponding to the number of times, and configure random access resources corresponding to the repetition number being 4 as the multiple ROs corresponding to the maximum repetition number based on the resource configuration condition, and so on.

At block 703, the first random access message is sent to the network device at the target ROs.

In embodiments of the disclosure, the terminal may repeatedly send the Msgl to the network device at the target ROs with the quantity equal to the number of times. The network device may send a second random access message Msg2 to the terminal after receiving the Msgl.

It should be noted that, in embodiments of the disclosure, the first random access message Msgl is a random access preamble sequence, and the second random access message Msg2 is an RAR.

In conclusion, the number of times for sending the first random access message is determined. The target ROs with the quantity equal to the number of times are determined from the candidate ROs in response to the number of times being more than one. The first random access message is sent to the network device at the target ROs. In this way, the terminal may send the PRACH employing reasonable repetition numbers in different conditions, thus increasing a fairness of an access opportunity, and saving an energy consumption of the terminal, and at the same time, flexibly configuring the resources used for initiating random access, and improving the efficiency of a system.

Referring to FIG. 9, FIG. 9 is a flow chart illustrating a random access method according to an embodiment of the disclosure. It should be noted that the random access method in embodiments of the disclosure is performed by a terminal, and the terminal supports a physical random access channel (PRACH) repetition. The random access method may be performed independently or in combination with any other embodiment of the disclosure. As illustrated in FIG. 9, the random access method may include the following.

At block 901, a number N of times for sending a first random access message is determined.

At block 902, in response to the number of times being more than one (that is, N>1), target ROs with a quantity equal to the number of times are determined from candidate ROs, in which the candidate ROs includes multiple ROs corresponding to a maximum repetition number.

At block 903, the first random access message is sent to the network device at the target ROs.

In embodiments of the disclosure, the actions at blocks 901 to 903 may be realized by any one of embodiments of the disclosure, which are not limited in embodiments of the disclosure and are not elaborated here.

At block 904, an RAR window is started after the multiple ROs corresponding to the maximum repetition number end.

In embodiments of the disclosure, the network device may try to perform merging correlation detection on a preamble received after a last RO in the multiple ROs corresponding to the maximum repetition number ends. After the terminal sends the Msgl at the target RO, the terminal may start the RAR window after repetition ROs end, and try to detect and monitor a second random access message Msg2 sent by the network device.

As an example, as illustrated in FIG. 8b, the terminal may start the RAR window after an end of eight ROs.

At block 905, the RAR sent by the network device is monitored within the RAR window.

In embodiments of the disclosure, the terminal may monitor the RAR sent by the network device within the RAR window started, and try to detect the Msg2 sent by the network device.

In conclusion, the number of times for sending the first random access message is determined. The target ROs with the quantity equal to the number of times are determined from the candidate ROs configured by the network device in response to the number of times being more than one. The candidate ROs includes the multiple ROs corresponding to the maximum repetition number. The first random access message is sent to the network device at the target ROs. After the multiple ROs corresponding to the maximum repetition number end, the RAR window is started to monitor the RAR sent by the network device within the RAR window. In this way, the terminal may send the PRACH employing reasonable repetition numbers in different conditions, thus increasing a fairness of an access opportunity, and saving an energy consumption of the terminal, and at the same time, flexibly configuring the resources used to initiate random access, and improving a communication efficiency of a system.

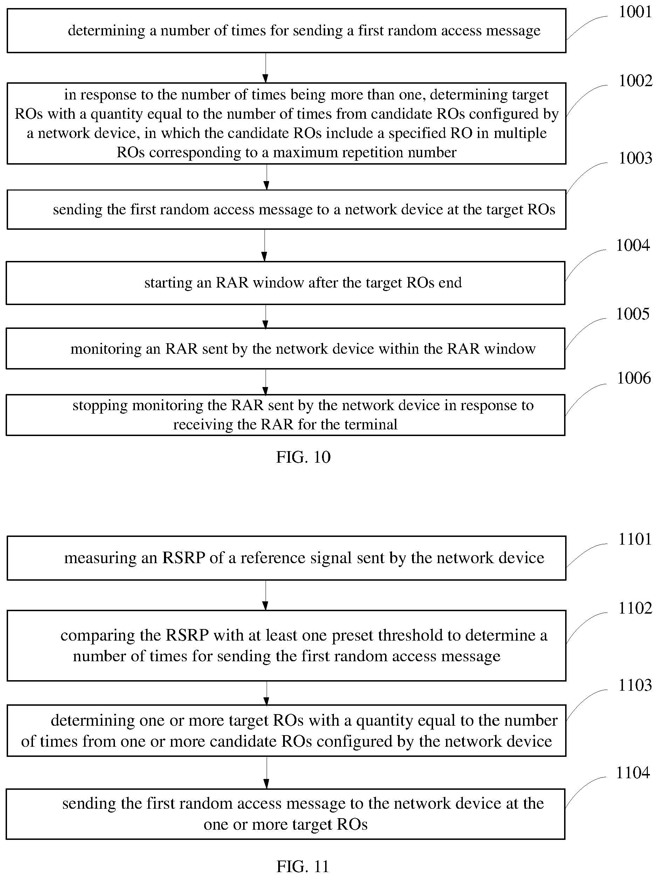

Referring to FIG. 10, FIG. 10 is a flow chart illustrating a random access method according to an embodiment of the disclosure. It should be noted that the random access method in embodiments of the disclosure is performed by a terminal, and the terminal supports a physical random access channel (PRACH) repetition. The random access method may be performed independently or in combination with any other embodiment of the disclosure. As illustrated in FIG. 10, the random access method may include the following.

At block 1001, a number N of times for sending a first random access message is determined.

At block 1002, in response to the number of times being more than one (that is, N>1), target ROs with a quantity equal to the number of times are determined from candidate ROs configured by the network device, in which the candidate ROs include a specified RO in multiple ROs corresponding to a maximum repetition number.

At block 1003, the first random access message is sent to the network device at the target ROs.

In embodiments of the disclosure, the actions at blocks 1001 to 1003 may be realized by any one of embodiments of the disclosure, which are not limited in embodiments of the disclosure and are not elaborated here.

At block 1004, an RAR window is started after the target ROs end.

In embodiments of the disclosure, the network device may attempt to perform correlation detection on a preamble received at a position where the specified RO ends. The terminal immediately starts the RAR window after sending the Msgl at the target ROs, to try to detect and monitor a second random access message Msg2 sent by the network device.

That is, as illustrated in FIGs. 8c and 8d, the network device may perform merging correlation detection on a PRACH at each position (positions after RO#1, RO#3, RO#5 and RO#7 in FIG. 8c and positions after RO#3 and RO#5 in FIG. 8d) where each specified RO ends. In case that the detection successes, the network device may send an RAR to the terminal. After the target ROs end, the terminal may start the RAR window, and try to monitor and detect the RAR sent by the network device.

At block 1005, the RAR sent by the network device is monitored within the RAR window.

In embodiments of the disclosure, the terminal may monitor the RAR sent by the network device within the RAR window started, and try to detect the Msg2 sent by the network device.

At block 1006, monitoring the RAR sent by the network device is stopped in response to receiving the RAR for the terminal.

In embodiments of the disclosure, the terminal may stop monitoring the RAR sent by the network device after receiving the RAR for the terminal device.

It may be understood that, in embodiments of the disclosure, when the network device performs merging correlation detection on the PRACH after the end of the multiple ROs corresponding to the maximum repetition number, the network device may still detect a preamble sent by the terminal at the target RO, causing that the network device may send the RAR multiple times for the same PRACH sent by the same terminal.

Therefore, the terminal may stop monitoring the RAR sent by the network device after receiving the RAR for the terminal as described in embodiments of the disclosure.

In some implementations, the terminal may also receive multiple RARs and select one RAR from the multiple RARs.

In conclusion, the number of times for sending the first random access message is determined. The target ROs with the quantity equal to the number of times are determined from the candidate ROs configured by the network device in response to the number of times being more than one, in which the candidate ROs include the specified RO in the multiple ROs corresponding to the maximum repetition number. The first random access message is sent to the network device at the target ROs. The RAR window is started after the multiple ROs corresponding to the maximum repetition number end, and the RAR sent by the network device is monitored within the RAR window. In this way, the terminal may send the PRACH employing reasonable repetition numbers in different conditions, thus increasing a fairness of an access opportunity and saving an energy consumption of the terminal, and at the same time, flexibly configuring the resources used to initiate random access, improving the communication efficiency of the system, and shortening an access delay of the terminal.

Referring to FIG. 11, FIG. 11 is a flow chart illustrating a random access method according to an embodiment of the disclosure. It should be noted that the random access method in embodiments of the disclosure is performed by a terminal, and the terminal supports a physical random access channel (PRACH) repetition. The random access method may be performed independently or in combination with any other embodiment of the disclosure. As illustrated in FIG. 11, the random access method may include the following.

At block 1101, an RSRP of a reference signal sent by the network device is measured.

In embodiments of the disclosure, the terminal may measure the RSRP of the reference signal sent by the network device.

Alternatively, the reference signal may be a synchronization signal and physical broadcast channel (PBCH) block (SSB), or other reference signal.

At block 1102, the RSRP is compared with at least one preset threshold to determine a number of times for sending the first random access message.

In embodiments of the disclosure, the terminal may determine an uplink channel coverage of the terminal based on a comparison between the RSRP measured and the at least one preset threshold, and determine the number of times for sending the first random access message.

In embodiments of the disclosure, each of the at least one preset threshold corresponds to a number of times.

In some implementations, the at least one preset threshold and the number of times corresponding to each preset threshold are determined based on a provision of a protocol or a configuration/indication of a network device.

As an example, as illustrated in the following table, the terminal may determine four preset thresholds and the corresponding numbers of times based on the provision of the protocol or the configuration/indication of the network device. It may be understood that, the at least one preset threshold and the corresponding number of times illustrated in the table are only illustrated as an example, and other number of preset thresholds and the number of times corresponding to each preset threshold may be set, which are not limited here.

| threshold | the number of times for sending repeatedly |
|---|---|
| threshold 1 | M |
| threshold 2 | N |
| threshold 3 | P |
| threshold 4 | Q |

In the table, threshold 1 > threshold 2> threshold 3> threshold 4, and M<N<P<Q, M<N<P<Q are all natural numbers.

For the at least one preset threshold and the corresponding number of times as illustrated in this example, in case that the RSRP measured by the terminal is greater than the threshold 1, no repetition is performed; in case that the RSRP is lower than the threshold 1 and greater than the threshold 2, the PRACH repetition is performed M times; in case that the RSRP is lower than the threshold 2 and greater than the threshold 3, the PRACH repetition is performed N times; in case that the RSRP is lower than the threshold 3 and greater than the threshold 4, the PRACH repetition is performed P times; and in case that the RSRP is lower than the threshold 4, the PRACH repetition is performed Q times.

In some implementations, the network device may configure each of the at least one preset threshold, and the terminal determines the at least one preset threshold by receiving the configuration of the network device. Alternatively, the indication of the network device is used to indicate each of the at least one preset threshold, and the terminal determines the at least one preset threshold by receiving the indication of the network device.

In some implementations, the network device may also configure only one of the at least one preset threshold, and the remaining preset thresholds are determined based on a certain calculation formula.

As an example, for example, the network device only configures the threshold 1, the threshold 2= the threshold 1+ Δ, the threshold 3 = the threshold 1+2 Δ, and so on. A detailed value of Δ may be provisioned by the protocol (for example, the value of Δ is -3dB) or indicated by the network device.

In addition, alternatively, the number of the at least one preset thresholds may be indicated by the network device or agreed of the protocol, or may also be determined in other implicit way, such as determined by the configuration of the number of times of PRACH repetition.

In some implementations, each of the at least one preset threshold may be agreed by the protocol, and the terminal determines the at least one preset threshold based on the protocol. Only one of the at least one preset threshold may also be agreed by the protocol, and the other preset thresholds are determined based on a certain calculation formula.

In some implementations, the network device may configure the number of times corresponding to each preset threshold, and the terminal determines the number of times corresponding to each preset threshold by receiving the configuration of the network device. Alternatively, the indication of the network device is used to indicate the number of times corresponding to each preset threshold, and the terminal determines the number of times corresponding to each preset threshold by receiving the indication of the network device.

In some implementations, the network device may also only configure the number of times corresponding to one preset threshold, and the numbers of times corresponding to the remaining preset thresholds are determined based on a certain calculation formula.

As an example, for example, the network device only configures the number M of times, and the numbers of times are N=M*k, P=M*2k, and so on. A detailed value of k may be agreed by the protocol (for example, the value of k is 2), or indicated by the network device.

In addition, alternatively, the number of times may be agreed by the network device or the protocol, and may also be determined in other implicit way, such as determined by the number of preset thresholds.

In some implementations, the number of times corresponding to each preset threshold may be agreed by the protocol, and the terminal determines the number of times corresponding to each preset threshold based on the provision of the protocol. The number of times corresponding to one preset threshold may only be agreed by the protocol, and the number of times corresponding to other preset threshold is determined based on a certain calculation formula.

It may be understood that, in embodiments of the disclosure, the preset threshold is a threshold in a time division duplex (TDD) frequency band, because the terminal needs to determine a coverage performance of the uplink channel by measuring a downlink reference signal based on a channel reciprocity.

For a frequency division duplex (FDD) frequency band, propagation loss in different carrier frequencies may be different, so an RSRP threshold for the FDD frequency band may be shifted differently for different carrier frequencies. For example, it may be set that the RSRP threshold in the FDD frequency band = a threshold in the TDD frequency band + an offset.

At block 1103, one or more target ROs with a quantity equal to the number of times are determined from one or more candidate ROs configured by the network device.

At block 1104, the first random access message is sent to the network device at the one or more target ROs.

In embodiments of the disclosure, the actions at blocks 1103 and 1104 may be realized in any one of embodiments of the disclosure, which are not limited in embodiments of the disclosure, and may not be elaborated here.

In embodiments of the disclosure, the terminal may start an RAR window after sending the Msgl, and may try to monitor and detect an RAR sent by the network device within the RAR window.

In conclusion, the RSRP of the reference signal sent by the network device is measured. The RSRP is compared with the at least one preset threshold. The number of times for sending the first random access message is determined. The one or more target ROs with the quantity equal to the number of times are determined from the candidate ROs configured by the network device. The first random access message is sent to the network device at the one or more target ROs. Therefore, the terminal may employ reasonable repetition numbers to send the PRACH in different conditions, thus increasing a fairness of an access opportunity and saving an energy consumption of the terminal, and at the same time, configuring resources for initiating random access flexibly, and improving a communication efficiency of a system.

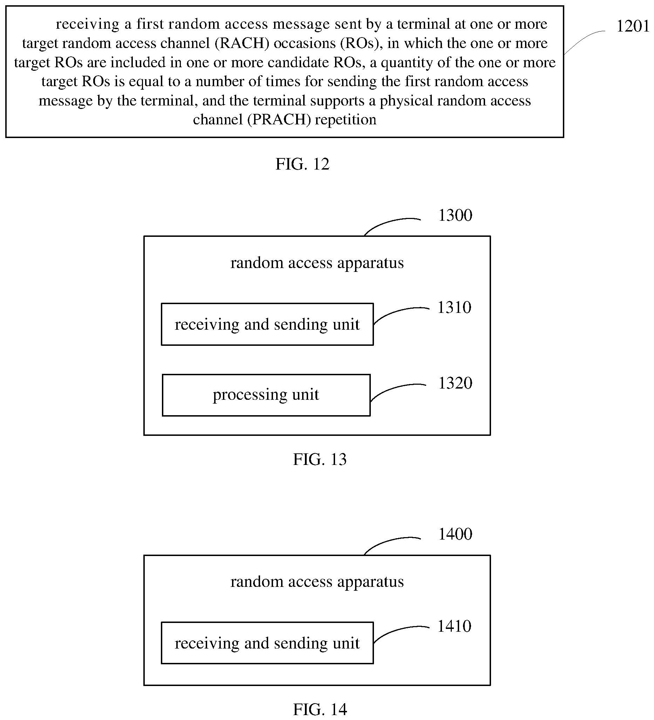

Referring to FIG. 12, FIG. 12 is a flow chart illustrating a random access method according to an embodiment of the disclosure. It should be noted that the random access method in embodiments of the disclosure is performed by a network device. The random access method may be performed independently or in combination with any other embodiment of the disclosure. As illustrated in FIG. 12, the random access method may include the following.

At block 1201, a first random access message sent by a terminal is received at one or more target ROs. The one or more target ROs are included in one or more candidate ROs, a quantity of the one or more target ROs is equal to a number of times for sending the first random access message by the terminal, and the terminal supports a PRACH repetition.

In embodiments of the disclosure, the network device may receive the first random access message Msgl sent by the terminal at the one or more target ROs. The network device may send a second random access message Msg2 to the terminal after receiving the Msgl.

The one or more target ROs are included in the one or more candidate ROs configured by the network device, and a quantity of the one or more target ROs is equal to the number of times for sending the first random access message by the terminal, and the terminal supports the PRACH repetition.

It should be noted that, in embodiments of the disclosure, the first random access message Msgl is a random access preamble sequence, and the second random access message Msg2 is an RAR.

In some implementations, the network device may send a configuration or indication signaling to the terminal, and the configuration or indication signaling is used to determine the number of times for sending the first random access message Msgl.

Alternatively, the configuration or indication signaling may be DCI, a system information block such as an SIB1, an RRC signaling, or the like.

In some implementations, the network device may also send a reference signal to the terminal, and the terminal may determine the number of times for sending the first random access message Msgl by measuring an RSRP of the reference signal and comparing a measured RSRP with at least one preset threshold.

Alternatively, the network device may send configuration/indication information to the terminal, and the configuration/indication information is used to determine the at least one preset threshold and the number of times corresponding to each preset threshold.

In some implementations, in response to the number of times for sending the Msgl repeatedly by the terminal being one, the one or more candidate ROs include at least one of:
a first RO, in which the first RO is used for the terminal supporting the PRACH repetition to send the first random access message once;
a second RO, in which the second RO is used for the terminal not supporting the PRACH repetition to send the first random access message; or
at least one RO in repetition ROs, in which the repetition ROs include multiple ROs, and the multiple ROs are used to send a PRACH repeatedly.

In some implementations, the one or more candidate ROs include the at least one RO in the repetition ROs, the network device may detect the first random access message sent by the terminal after the repetition ROs end; and send the RAR to the terminal in response to successful detection.

In some implementations, the one or more candidate ROs include the at least one RO in the repetition ROs, and the network device may detect the first random access message sent by the terminal after each of the at least one RO ends; and send the RAR to the terminal in response to successful detection.

In some implementations, in response to the number of times for sending the Msgl repeatedly by the terminal being more than one, the one or more candidate ROs include at least one of:
a group of ROs corresponding to the number of times;
multiple ROs corresponding to a maximum repetition number; or
a specified RO in multiple ROs corresponding to a maximum repetition number.

In some implementations, the network device sends first indication information to the terminal. The first indication information is used to determine that the one or more candidate ROs include the specified RO in the multiple ROs corresponding the maximum repetition number.

In some implementations, the one or more candidate ROs include the multiple ROs corresponding to the maximum repetition number. The network device may detect the first random access message sent by the terminal after the multiple ROs corresponding to the maximum repetition number end; and send the RAR to the terminal in response to successful detection.

In some implementations, the one or more candidate ROs include the specified RO in the multiple ROs corresponding to the maximum repetition number. The network device may detect the first random access message sent by the terminal after the specified RO ends; and send the RAR to the terminal in response to successful detection.

In conclusion, the first random access message sent by the terminal at the one or more target ROs is received, in which the one or more target ROs are included in the one or more candidate ROs, the quantity of the one or more target ROs is equal to the number of times for sending the first random access message by the terminal, and the terminal supports the PRACH repetition, such that the terminal may employ reasonable repetition numbers to transmit the PRACH in different conditions, which increases a fairness of an access opportunity and saves an energy consumption of the terminal, and at the same time, flexibly configures resources used for initiating random access, and improves a communication efficiency of a system.

Corresponding to the random access method according to the above embodiments, the disclosure also provides a random access apparatus. Since the random access apparatus in this embodiment corresponds to the random access method provided in the above embodiments, the implementation of the random access method is also applicable to the random access apparatus according to following embodiments, which is not described in detail.

Referring to FIG. 13, FIG. 13 is a block diagram illustrating a random access apparatus according to an embodiment of the disclosure.

As illustrated in FIG. 13, the random access apparatus 1300 includes: a receiving and sending unit 1310 and a processing unit 1320.

The processing unit 1320 is configured to determine a number of times for sending a first random access message.

The processing unit 1320 is also configured to determine one or more target ROs with a quantity equal to the number of times from one or more candidate ROs configured by a network device.

The receiving and sending unit 1310 is configured to send the first random access message to the network device at the one or more target ROs.

Alternatively, in response to the number of times being one, the one or more candidate ROs include at least one of:
a first RO, in which the first RO is used for the terminal supporting the PRACH repetition to send the first random access message once;
a second RO, in which the second RO is used for the terminal not supporting the PRACH repetition to send the first random access message; or
at least one RO in repetition ROs, in which the repetition ROs include multiple ROs, and the multiple ROs are used to send a PRACH repeatedly.

Alternatively, the one or more candidate ROs include the at least one RO in the repetition ROs, and the receiving and sending unit 1310 is also configured to:
start an RAR window after the repetition ROs end; and
monitor an RAR sent by the network device within the RAR window.

Alternatively, the one or more candidate ROs include the at least one RO in the repetition ROs, and the receiving and sending unit 1310 is also configured to:
start an RAR window after the one or more target ROs end;
monitor an RAR sent by the network device within the RAR window; and
stop monitoring the RAR sent by the network device in response to receiving the RAR for the terminal.

Alternatively, in response to the number of times being more than one, the one or more candidate ROs include at least one of:
a group of ROs corresponding to the number of times;
multiple ROs corresponding to a maximum repetition number; or
a specified RO in multiple ROs corresponding to a maximum repetition number.

Alternatively, the one or more candidate ROs include the specified RO in the multiple ROs corresponding to the maximum repetition number, and the specified RO is determined based on a provision of a protocol or an indication of the network device.

Alternatively, the one or more candidate ROs include the multiple ROs corresponding to the maximum repetition number, and the receiving and sending unit 1310 is also configured to:
start an RAR window after the multiple ROs corresponding to the maximum repetition number end; and
monitor an RAR sent by the network device within the RAR window.

Alternatively, the one or more candidate ROs include the specified RO in the multiple ROs corresponding to the maximum repetition number, and the receiving and sending unit 1310 is also configured to:
start an RAR window after the one or more target ROs end;
monitor an RAR sent by the network device within the RAR window; and
stop monitoring the RAR sent by the network device in response to receiving the RAR for the terminal.

Alternatively, the processing unit 1320 is configured to:
receive configuration/indication signaling sent by the network device, in which the configuration/indication signaling indicates the number of times.

Alternatively, the processing unit 1320 is configured to:
measure an RSRP of a reference signal sent by the network device; and
determine the number of times by comparing the RSRP with at least one preset threshold.

Alternatively, the at least one preset threshold and the number of times corresponding to each preset threshold are determined based on a provision of a protocol or a configuration/indication of the network device.

With the random access apparatus in this embodiment, the number of times for sending the first random access message is determined , the one or more target ROs with the quantity equal to the number of times is determined from the one or more candidate ROs, and the first random access message is sent to the network device at the one or more target ROs, such that the terminal may send the PRACH employing reasonable repetition numbers in different conditions, which increases a fairness of an access opportunity, saves an energy consumption of the terminal, and at the same time, may configure resources used to initiate random access flexibly and improve a communication efficiency of a communication system.

Referring to FIG. 14, FIG. 14 is a block diagram illustrating a random access apparatus according to an embodiment of the disclosure.

As illustrated in FIG. 14, the random access apparatus 1400 includes a receiving and sending unit 1410.

The receiving and sending unit 1410 is configured to receive a first random access message sent by a terminal at one or more target ROs.

The one or more target ROs are included in one or more candidate ROs, a quantity of the one or more target ROs is equal to a number of times for sending the first random access message by the terminal, and the terminal supports a PRACH repetition.

Alternatively, in response to the number of times being one, the one or more candidate ROs include at least one of:
a first RO, in which the first RO is used for the terminal supporting the PRACH repetition to send the first random access message once;
a second RO, in which the second RO is used for the terminal not supporting the PRACH repetition to send the first random access message; or
at least one RO in repetition ROs, in which the repetition ROs include multiple ROs, and the multiple ROs are used to send a PRACH repeatedly.

Alternatively, the one or more candidate ROs include the at least one RO in the repetition ROs, and the receiving and sending unit 1410 is also configured to:
detect the first random access message sent by the terminal after the repetition ROs end; and
send an RAR to the terminal in response to successful detection.

Alternatively, the one or more candidate ROs include the at least one RO in the repetition ROs, and the receiving and sending unit is also configured to:
detect the first random access message sent by the terminal after each of the at least one RO ends; and
send a random access response (RAR) to the terminal in response to successful detection.

Alternatively, in response to the number of times being more than one, the one or more candidate ROs include at least one of:
a group of ROs corresponding to the number of times;
multiple ROs corresponding to a maximum repetition number; or
a specified RO in multiple ROs corresponding to a maximum repetition number.

Alternatively, the receiving and sending unit 1410 is also configured to:
send first indication information to the terminal, in which the first indication information is used to determine that the one or more candidate ROs include the specified RO in the multiple ROs corresponding the maximum repetition number.

Alternatively, the one or more candidate ROs include the multiple ROs corresponding to the maximum repetition number, and the receiving and sending unit 1410 is also configured to:
detect the first random access message sent by the terminal after the multiple ROs corresponding to the maximum repetition number end; and
send an RAR to the terminal in response to successful detection.

Alternatively, the one or more candidate ROs include the specified RO in the ROs corresponding to the maximum repetition number, and the receiving and sending unit 1410 is also configured to:
detect the first random access message sent by the terminal after the specified RO ends; and
send an RAR to the terminal in response to successful detection.

Alternatively, the receiving and sending unit 1410 is also configured to:
send a configuration/indication signaling to the terminal, in which the configuration/indication signaling indicates the number of times for sending the first random access message.

Alternatively, the receiving and sending unit 1410 is also configured to:
send configuration/indication information to the terminal, in which the configuration/indication information is used to determine at least one preset threshold and a number of times corresponding to each preset threshold.

The at least one preset threshold is used for the terminal to determine the number of times.

With the random access apparatus, the first random access message sent by the terminal at the one or more target ROs is received, in which the one or more target ROs are included in the one or more candidate ROs, the quantity of the one or more target ROs is equal to the number of times for sending the first random access message by the terminal, and the terminal supports the PRACH repetition, such that the terminal may employ reasonable repetition numbers to transmit the PRACH in different conditions, which increases a fairness of an access opportunity and saves an energy consumption of the terminal, and at the same time, flexibly configures resources used for initiating random access, and improves a communication efficiency of a system.

In order to realize the above embodiments, embodiments of the disclosure also provide a communication device, including a processor and a memory. A computer program is stored in the memory, and the processor is configured to execute the computer program stored in the memory, to enable the communication device to perform the random access method illustrated in the embodiments in FIGs. 2 to 11.

In order to realize the above embodiments, embodiments of the disclosure also provide a communication device, including a processor and a memory. A computer program is stored in the memory, and the processor is configured to execute the computer program stored in the memory, to enable the communication device to perform the random access method illustrated in the embodiment in FIG. 12.

In order to realize the above embodiments, embodiments of the disclosure also provide a communication device, including a processor and an interface circuit. The interface circuit is configured to receive code instructions and transmitting the code instructions to the processor. The processor is configured to run the code instructions to perform the random access method illustrated in the embodiments in FIGs. 2 to 11.

In order to realize the above embodiments, embodiments of the disclosure also provide a communication device, including a processor and an interface circuit. The interface circuit is configured to receive code instructions and transmitting the code instructions to the processor. The processor is configured to run the code instructions to perform the random access method illustrated in the embodiment in FIG. 12.

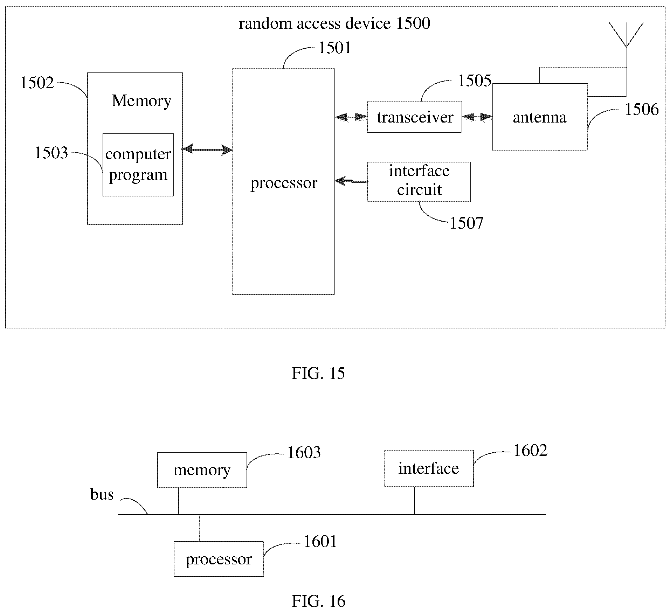

Referring to FIG. 15, FIG. 15 is a block diagram illustrating a random access device according to another embodiment of the disclosure. The random access device 1500 may be the network device, the terminal, or a chip, a chip system, a processor or the like that supports the network device to realize the above method, or a chip, a chip system, a processor or the like that supports the terminal to realize the above method. The device may be configured to realize the methods described in the above method embodiments. For details, please refer to the description in the above method embodiments.

The random access device 1500 may include one or more processors 1501. The processor 1501 may be a general-purpose processor or a dedicated processor or the like, such as a baseband processor or a central processing processor. The baseband processor may be configured to process a communication protocol and communication data. The central processing processor may be configured to control the random access device (such as, a base station, a baseband chip, a terminal, a terminal chip, a DU, or a CU), to execute a computer program, and to process data of the computer program.

Alternatively, the random access device 1500 may further include one or more memories 1502 having a computer program 1503 stored thereon. The processor 1501 is configured to execute the computer program 1503, to enable the random access device 1500 to perform the method described in the above method embodiments. The computer program 1503 may be solidified in the processor 1501. In this case, the processor 1501 may be implemented by hardware.

Alternatively, data may also be stored in the memory 1502. The random access device 1500 and the memory 1502 may be set separately or integrated together.

Alternatively, the random access device 1500 may further include a transceiver 1505 and an antenna 1506. The transceiver 1505 may be referred to as a transceiver unit, a transceiver, a transceiver circuit or the like for realizing a receiving and sending function. The transceiver 1505 may include a receiver and a sender. The receiver may be referred to as a receiver or a receiving circuit, for realizing a receiving function. The sender may be referred to as a transmitter or a sending circuit for realizing a sending function.

Alternatively, the random access device 1500 may further include one or more interface circuits 1507. The interface circuit 1507 is configured to receive code instructions and transmit the code instructions to the processor. The processor 1501 runs the code instructions to enable the random access device 1500 to perform the method described in the above method embodiments.

In an implementation, the processor 1501 may include a transceiver for realizing the receiving and sending functions. For example, the transceiver may be a transceiver circuit, an interface, or an interface circuit. The transceiver circuit, the interface, or the interface circuit for realizing the receiving and sending functions may be separate or integrated together. The transceiver circuit, the interface, or the interface circuit may be configured to read and write codes/data, or the transceiver circuit, the interface, or the interface circuit may be configured to signal transmission or delivery.

In an implementation, the random access device 1500 may include a circuit. The circuit may realize a function of sending, receiving or communicating in the above method embodiments. The processor and the transceiver described in the disclosure may be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The random access device described in the above embodiments may be the network device or the terminal, but a scope of the random access device described in the disclosure is not limited thereto, and a structure of the random access device may not be limited in FIGs. 13 and 14. The random access device may be a standalone device or may be part of a larger device. For example, the random access device may be:
(1) a stand-alone IC, a chip, a chip system or a subsystem;
(2) a collection of ICs including one or more ICs, alternatively, the collection of ICs also including storage components for storing data and computer programs;
(3) an ASIC, such as a modem;
(4) modules that may be embedded in other devices;
(5) a receiver, a terminal, a smart terminal, a cellular phone, a wireless device, a handheld machine, a mobile unit, an in-vehicle device, a network device, a cloud device, an artificial intelligence device, and the like; or
(6) others.

The case where the random access device may be the chip or the chip system, please refer to a block diagram of a chip illustrated in FIG. 16. The chip illustrated in FIG. 16 includes a processor 1601 and an interface 1602. There may be one or more processors 1601, and there may be more than one interface 1602.

For the case where the chip is configured to realize the functions of the network device in embodiments of the disclosure,
an interface 1602 is configured to transmit code instructions to the processor; and
a processor 1601 is configured to execute the code instructions to perform the methods as illustrated in FIGs. 2 to 11.

For the case that the chip is configured to realize the functions of the terminal in embodiments of the disclosure:
an interface 1602 is configured to transmit code instructions to the processor; and
a processor 1601 is configured to execute the code instructions to perform the method as illustrated in FIG. 12.

Alternatively, the chip further includes a memory 1603. The memory 1603 is configured to store necessary computer programs and data.

It may be understood by those skilled in the art that various illustrative logical blocks and steps listed in embodiments of the disclosure may be implemented by electronic hardware, computer software, or a combination of both. Whether such function is implemented by hardware or software depends on a particular application and a design requirement of the entire system. Those skilled in the art may, for each particular application, use various methods to execute the described function, but such implementation should not be understood as beyond the scope of protection of embodiments of the disclosure.

Embodiments of the disclosure also provide a communication system. The communication system includes a random access device as the terminal and a random access device as the network device in the embodiments illustrated in FIGs. 13- 14, or the communication system includes a random access device as the terminal and a random access device as the network device in the embodiments illustrated FIG. 15.

The disclosure further provides a readable storage medium for storing instructions. When the instructions are executed by a computer, the functions according to any of the above method embodiments are realized.

The disclosure further provides a computer program product. When the computer program product is executed by the computer, the functions according to any of the above method embodiments are realized.

The above embodiments may be implemented in whole or in part by software, hardware, firmware, or any combination thereof. When implemented using software, the above embodiments may be implemented, in whole or in part, in the form of the computer program product. The computer program product includes one or more computer programs. When loading and executing the computer program in the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired way (e.g., using coaxial cables, fiber optics, or digital subscriber lines (DSLs) or wireless way (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may understand that various numerical numbers such as the first, second, and the like involved in the disclosure are only described for the convenience of differentiation, and are not used to limit the scope of embodiments of the disclosure, or used to indicate the order of precedence.

The term "at least one" in the disclosure may also be described as one or more, and the term "more than one" may be two, three, four, or more, which is not limited in the disclosure. In embodiments of the disclosure, for a type of technical features, the term "first", "second", and "third", "A", "B", "C" and "D" and the like are used to distinguish different technical features of the type, the technical features described using the "first", "second", and "third", and "A", "B", "C" and "D" do not indicate any order of precedence or magnitude.

The correspondence illustrated in tables in the disclosure may be configured, or may be predefined. Value of information in each table is merely an example, and may be configured as other values, which is not limited in the disclosure. When a correspondence between information and each parameter is configured, there does not require to configure all correspondences illustrated in the tables. For example, in the tables in the disclosure, the correspondence illustrated in some rows may also be not configured. For another example, appropriate deformation adjustment may be performed based on the above tables, for example, splitting, merging, and the like. Names of titles illustrated in the above tables may also use other names that may be understood by the communication apparatus, and values or representations of the parameters may also be other values or representations that may be understood by the communication apparatus. When each of the above tables is realized, other data structures may be used. For example, an array, a queue, a container, a stack, a linear table, a pointer, a linked list, a tree, a graph, a structure, a class, a heap, a hash table and the like may be used.

Predefining in the disclosure may be understood as defining, pre-defining, storing, pre-storing, pre-negotiating, pre-configuring, curing, or pre-firing.

The ordinary skill in the art may be aware that units and algorithm steps of the examples described in connection with the embodiments disclosed herein may be implemented by electronic hardware, or a combination of computer software and electronic hardware. Whether the functions are performed by hardware or software depends on a specific application and a design constraint condition of the technical solution. Those skilled in the art may use different methods to realize the described functions for each specific application, but it should not be considered that such realization goes beyond the scope of the disclosure.

Those skilled in the art may clearly understand that, for the convenience and brevity of description, a detailed working process of the described system, apparatus, and the unit may refer to a corresponding process in the above method embodiments, which is not elaborated herein again.

It should be understood that, various forms of procedures illustrated above may be configured to reorder, add or delete blocks. For example, blocks described in the disclosure may be performed in parallel, sequentially, or in a different order, as long as the desired result of the technical solution disclosed in the disclosure may be achieved, which will not be limited herein.

The above detailed implementations do not constitute a limitation on the protection scope of the disclosure. Those skilled in the art should understand that various modifications, combinations, sub-combinations and substitutions may be made based on a design requirement and other factors. Any modification, equivalent replacement, improvement, etc., made within the spirit and principle of embodiments of the disclosure shall be included within the protection scope of embodiments of the disclosure.

## Claims

1. A random access method, performed by a terminal, wherein the terminal supports a physical random access channel (PRACH) repetition, and the method comprises:
determining a number of times for sending a first random access message;
determining one or more target random access channel (RACH) occasions (ROs) with a quantity equal to the number of times from one or more candidate ROs; and
sending the first random access message to a network device at the one or more target ROs.

2. The random access method of claim 1, wherein, in response to the number of times being one, the one or more candidate ROs comprise at least one of:
a first RO, wherein the first RO is used for the terminal supporting the PRACH repetition to send the first random access message once;
a second RO, wherein the second RO is used for the terminal not supporting the PRACH repetition to send the first random access message; or
at least one RO in repetition ROs, wherein the repetition ROs comprise a plurality of ROs, and the plurality of ROs are used to send a PRACH repeatedly.

3. The random access method of claim 2, wherein the one or more candidate ROs comprise the at least one RO in the repetition ROs, and the method further comprises:
starting a random access response (RAR) window after the repetition ROs end; and
monitoring an RAR sent by the network device within the RAR window.

4. The random access method of claim 2, wherein the one or more candidate ROs comprise the at least one RO in the repetition ROs, and the method further comprises:
starting a random access response (RAR) window after the one or more target ROs end;
monitoring an RAR sent by the network device within the RAR window; and
stopping monitoring the RAR sent by the network device in response to receiving the RAR for the terminal.

5. The random access method of claim 1, wherein, in response to the number of times being more than one, the one or more candidate ROs comprise at least one of:
a group of ROs corresponding to the number of times;
a plurality of ROs corresponding to a maximum repetition number; or
a specified RO in a plurality of ROs corresponding to a maximum repetition number.

6. The random access method of claim 5, wherein the one or more candidate ROs comprise the specified RO in the plurality of ROs corresponding to the maximum repetition number, and the specified RO is determined based on a provision of a protocol or an indication of the network device.

7. The random access method of claim 5, wherein the one or more candidate ROs comprise the plurality of ROs corresponding to the maximum repetition number, and the method further comprises:
starting a random access response (RAR) window after the plurality of ROs corresponding to the maximum repetition number end; and
monitoring an RAR sent by the network device within the RAR window.

8. The random access method of claim 5, wherein the one or more candidate ROs comprise the specified RO in the plurality of ROs corresponding to the maximum repetition number, and the method further comprises:
starting a random access response (RAR) window after the one or more target ROs end;
monitoring an RAR sent by the network device within the RAR window; and
stopping monitoring the RAR sent by the network device in response to receiving the RAR for the terminal.

9. The random access method of claim 1, wherein determining the number of times for sending the first random access message comprises:
receiving configuration/indication signaling sent by the network device, wherein the configuration/indication signaling indicates the number of times.

10. The random access method of claim 1, wherein determining the number of times for sending the first random access message comprises:
measuring a reference signal receiving power (RSRP) of a reference signal sent by the network device; and
determining the number of times by comparing the RSRP with at least one preset threshold.

11. The random access method of claim 10, wherein the at least one preset threshold and the number of times corresponding to each preset threshold are determined based on a provision of a protocol or a configuration/indication of the network device.

12. A random access method, performed by a network device, and comprising:
receiving a first random access message sent by a terminal at one or more target random access channel (RACH) occasions (ROs),
wherein the one or more target ROs are comprised in one or more candidate ROs, a quantity of the one or more target ROs is equal to a number of times for sending the first random access message by the terminal, and the terminal supports a physical random access channel (PRACH) repetition.

13. The random access method of claim 12, wherein, in response to the number of times being one, the one or more candidate ROs comprise at least one of:
a first RO, wherein the first RO is used for the terminal supporting the PRACH repetition to send the first random access message once;
a second RO, wherein the second RO is used for the terminal not supporting the PRACH repetition to send the first random access message; or
at least one RO in repetition ROs, wherein the repetition ROs comprise a plurality of ROs, and the plurality of ROs are used to send a PRACH repeatedly.

14. The random access method of claim 13, wherein the one or more candidate ROs comprise the at least one RO in the repetition ROs, and the method further comprises:
detecting the first random access message sent by the terminal after the repetition ROs end; and
sending a random access response (RAR) to the terminal in response to successful detection.

15. The random access method of claim 13, wherein the one or more candidate ROs comprise the at least one RO in the repetition ROs, and the method further comprises:
detecting the first random access message sent by the terminal after each of the at least one RO ends; and
sending a random access response (RAR) to the terminal in response to successful detection.

16. The random access method of claim 12, wherein in response to the number of times being more than one, the one or more candidate ROs comprise at least one of:
a group of ROs corresponding to the number of times;
a plurality of ROs corresponding to a maximum repetition number; or
a specified RO in a plurality of ROs corresponding to a maximum repetition number.

17. The random access method of claim 16, further comprising:
sending first indication information to the terminal, wherein the first indication information is used to determine that the one or more candidate ROs comprise the specified RO in the plurality of ROs corresponding the maximum repetition number.

18. The random access method of claim 16, wherein the one or more candidate ROs comprise the plurality of ROs corresponding to the maximum repetition number, and the method further comprises:
detecting the first random access message sent by the terminal after the plurality of ROs corresponding to the maximum repetition number end; and
sending a random access response (RAR) to the terminal in response to successful detection.

19. The random access method of claim 16, wherein the one or more candidate ROs comprise the specified RO in the plurality of ROs corresponding to the maximum repetition number, and the method further comprises:
detecting the first random access message sent by the terminal after the specified RO ends; and
sending a random access response (RAR) to the terminal in response to successful detection.

20. The random access method of claim 12, further comprising:
sending a configuration/indication signaling to the terminal, wherein the configuration/indication signaling indicates the number of times for sending the first random access message.

21. The random access method of claim 12, further comprising:
sending configuration/indication information to the terminal, wherein the configuration/indication information is used to determine at least one preset threshold and a number of times corresponding to each preset threshold,
wherein the at least one preset threshold is used for the terminal to determine the number of times.

22. A random access apparatus, applied to a terminal, wherein the terminal supports a physical random access channel (PRACH) repetition, and the random access apparatus comprises:
a processing unit, configured to determine a number of times for sending a first random access message;
wherein the processing unit is further configured to determine one or more target random access channel (RACH) occasions (ROs) with a quantity equal to the number of times from one or more candidate ROs; and
a receiving and sending unit, configured to send the first random access message to a network device at the one or more target ROs.

23. The random access apparatus of claim 22, wherein, in response to the number of times being one, the one or more candidate ROs comprise at least one of:
a first RO, wherein the first RO is used for the terminal supporting the PRACH repetition to send the first random access message once;
a second RO, wherein the second RO is used for the terminal not supporting the PRACH repetition to send the first random access message; or
at least one RO in repetition ROs, wherein the repetition ROs comprise a plurality of ROs, and the plurality of ROs are used to send a PRACH repeatedly.

24. The random access apparatus of claim 23, wherein the one or more candidate ROs comprise the at least one RO in the repetition ROs, and the receiving and sending unit is further configured to:
start a random access response (RAR) window after the repetition ROs end; and
monitor an RAR sent by the network device within the RAR window.

25. The random access apparatus of claim 23, wherein the one or more candidate ROs comprise the at least one RO in the repetition ROs, and the receiving and sending unit is further configured to:
start a random access response (RAR) window after the one or more target ROs end;
monitor an RAR sent by the network device within the RAR window; and
stop monitoring the RAR sent by the network device in response to receiving the RAR for the terminal.

26. The random access apparatus of claim 22, wherein, in response to the number of times being more than one, the one or more candidate ROs comprise at least one of:
a group of ROs corresponding to the number of times;
a plurality of ROs corresponding to a maximum repetition number; or
a specified RO in a plurality of ROs corresponding to a maximum repetition number.

27. The random access apparatus of claim 26, wherein the one or more candidate ROs comprise the specified RO in the plurality of ROs corresponding to the maximum repetition number, and the specified RO is determined based on a provision of a protocol or an indication of the network device.

28. The random access apparatus of claim 26, wherein the one or more candidate ROs comprise the plurality of ROs corresponding to the maximum repetition number, and the receiving and sending unit is further configured to:
start a random access response (RAR) window after the plurality of ROs corresponding to the maximum repetition number end; and
monitor an RAR sent by the network device within the RAR window.

29. The random access apparatus of claim 26, wherein the one or more candidate ROs comprise the specified RO in the plurality of ROs corresponding to the maximum repetition number, and the receiving and sending unit is further configured to:
start a random access response (RAR) window after the one or more target ROs end;
monitor an RAR sent by the network device within the RAR window; and
stop monitoring the RAR sent by the network device in response to receiving the RAR for the terminal.

30. The random access apparatus of claim 22, wherein the processing unit is configured to:
receive configuration/indication signaling sent by the network device, wherein the configuration/indication signaling indicates the number of times.

31. The random access apparatus of claim 22, wherein the processing unit is configured to:
measure a reference signal receiving power (RSRP) of a reference signal sent by the network device; and
determine the number of times by comparing the RSRP with at least one preset threshold.

32. The random access apparatus of claim 31, wherein the at least one preset threshold and the number of times corresponding to each preset threshold are determined based on a provision of a protocol or a configuration/indication of the network device.

33. An apparatus for reporting information, applied to a network device, and comprising:
a receiving and sending unit, configured to receive a first random access message sent by a terminal at one or more target random access channel (RACH) occasions (ROs),
wherein the one or more target ROs are comprised in one or more candidate ROs, a quantity of the one or more target ROs is equal to a number of times for sending the first random access message by the terminal, and the terminal supports a physical random access channel (PRACH) repetition.

34. The apparatus of claim 33, wherein, in response to the number of times being one, the one or more candidate ROs comprise at least one of:
a first RO, wherein the first RO is used for the terminal supporting the PRACH repetition to send the first random access message once;
a second RO, wherein the second RO is used for the terminal not supporting the PRACH repetition to send the first random access message; or
at least one RO in repetition ROs, wherein the repetition ROs comprise a plurality of ROs, and the plurality of ROs are used to send a PRACH repeatedly.

35. The apparatus of claim 34, wherein the one or more candidate ROs comprise the at least one RO in the repetition ROs, and the receiving and sending unit is further configured to:
detect the first random access message sent by the terminal after the repetition ROs end; and
send a random access response (RAR) to the terminal in response to successful detection.

36. The apparatus of claim 34, wherein the one or more candidate ROs comprise the at least one RO in the repetition ROs, and the receiving and sending unit is further configured to:
detect the first random access message sent by the terminal after each of the at least one RO ends; and
send a random access response (RAR) to the terminal in response to successful detection.

37. The apparatus of claim 33, wherein in response to the number of times being more than one, the one or more candidate ROs comprise at least one of:
a group of ROs corresponding to the number of times;
a plurality of ROs corresponding to a maximum repetition number; or
a specified RO in a plurality of ROs corresponding to a maximum repetition number.

38. The apparatus of claim 37, wherein the receiving and sending unit is further configured to:
send first indication information to the terminal, wherein the first indication information is used to determine that the one or more candidate ROs comprise the specified RO in the plurality of ROs corresponding the maximum repetition number.

39. The apparatus of claim 37, wherein the one or more candidate ROs comprise the plurality of ROs corresponding to the maximum repetition number, and the receiving and sending unit is further configured to:
detect the first random access message sent by the terminal after the plurality of ROs corresponding to the maximum repetition number end; and
send a random access response (RAR) to the terminal in response to successful detection.

40. The apparatus of claim 37, wherein the one or more candidate ROs comprise the specified RO in the plurality of ROs corresponding to the maximum repetition number, and the receiving and sending unit is further configured to:
detect the first random access message sent by the terminal after the specified RO ends; and
send a random access response (RAR) to the terminal in response to successful detection.

41. The apparatus of claim 33, wherein the receiving and sending unit is further configured to:
send a configuration/indication signaling to the terminal, wherein the configuration/indication signaling indicates the number of times for sending the first random access message.

42. The apparatus of claim 33, wherein the receiving and sending unit is further configured to:
send configuration/indication information to the terminal, wherein the configuration/indication information is used to determine at least one preset threshold and a number of times corresponding to each preset threshold,
wherein the at least one preset threshold is used for the terminal to determine the number of times.

43. A communication device, comprising a processor and a memory for storing a computer program, wherein when the computer program is executed by the processor, the communication device is caused to perform the random access method according to any of claims 1 to 11.

44. A communication device, comprising a processor and a memory for storing a computer program, wherein when the computer program is executed by the processor, the communication device is caused to perform the random access method according to any of claims 12 to 21.

45. A communication device, comprising: a processor and an interface circuit, wherein
the interface circuit is configured to receive code instructions and to transmit the code instructions to the processor; and
the processor is configured to execute the code instructions, to perform the random access method according to any one of claims 1 to 11.

46. A communication device, comprising: a processor and an interface circuit, wherein
the interface circuit is configured to receive code instructions and to transmit the code instructions to the processor; and
the processor is configured to execute the code instructions, to perform the random access method according to any one of claims 12 to 21.

47. A computer-readable storage medium, configured to store instructions, wherein when the instructions are executed, the random access method according to any one of claims 1 to 11 is realized.

48. A computer-readable storage medium, configured to store instructions, wherein when the instructions are executed, the random access method according to any one of claims 12 to 21 is realized.
